# EUROPEAN PATENT APPLICATION

(11) **EP 2 117 179 A1**
(43) Date of publication of application: **11.11.2009**
(21) Application number: 08757708.6
(22) Date of filing: 13.06.2008
(51) Int. Cl.: H04L 12/56, H04L 12/24, H04L 12/14, H04L 29/06

(54) **AN OPERATION INDICATION METHOD, DEVICE AND SYSTEM**

(30) Priority: 15.06.2007 CN 200710118993
(71) Applicant: Huawei Technologies Co., Ltd., Longgang District, Shenzhen Guangdong 518129 (CN)
(72) Inventor: ZOU, Ting, Longgang District Shenzhen, 518129 (CN); ZHENG, Zhenjian, Longgang District Shenzhen, 518129 (CN)
(74) Representative: Kreuz, Georg Maria
(86) International application number: PCT/CN2008/071297
(87) International publication number: WO 2008/154847

(57) **Abstract**

An operation indication method is provided, which includes the following steps. After receiving a trigger message, an application function (AF) entity determines an operation indication, in which the operation indication includes indicating a quality of service (QoS) resource reservation operation and/or a network address translation (NAT) control operation; the AF entity sends the operation indication to a service-based policy decision function (SPDF) entity; and the SPDF entity receives and identifies the operation indication and performs a corresponding operation according to the operation indication. Through extending an interface between the AF entity and the SPDF entity and adding a field representing the operation indication in interaction information, the SPDF entity can identify quickly and easily that it is required to perform the QoS resource reservation operation or the NAT control operation or both of them.

## Description

### CROSS-REFERENCE TO RELATED APPLICATION

The application claims the benefit of priority to China Patent Application No. 200710118993.2, filed on June 15, 2007, and entitled "AN OPERATION INDICATION METHOD, DEVICE AND SYSTEM", which is incorporated herein by reference in its entirety.

### BACKGROUND OF THE INVENTION

### Field of the Technology

The present invention relates to the field of communication technology, and more particularly to an operation indication method, an operation indication device, and an operation indication system.

### Background of the Invention

As Internet becomes increasingly prevailing, various network services have emerged one after another, and advanced multimedia communication systems have been continuously proposed. In one aspect, a real-time service is quite sensitive to the features of network transmission such as delay or delay jitter, and the real-time service is severely influenced if high-burst File Transfer Protocol (FTP) service or Hypertext Transfer Protocol (HTTP) service carrying image files exist on a network. In another aspect, since the multimedia services occupy a large bandwidth, it is difficult to reliably transmit a critical service that needs to be guaranteed by the existing network. Therefore, various Quality of Service (QoS) techniques have been proposed.

Operators and users in enterprises have high cognition capabilities for Ethernet and peer-to-peer Ethernet techniques. The Ethernet technique is one of the main techniques for constructing triple play and Metropolitan Area Network (MAN) in the future, so that

Ethernet services will be developed dramatically in the future market.

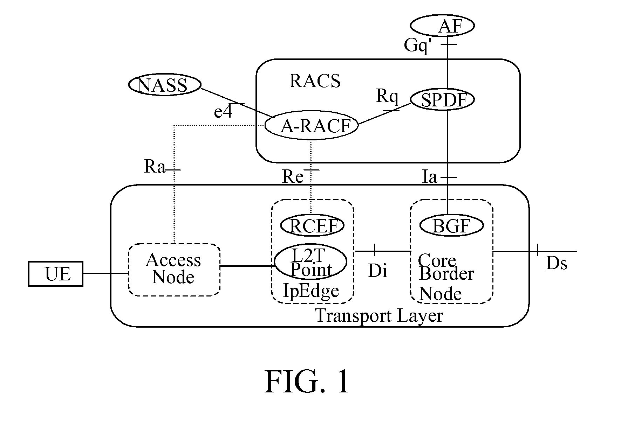

In view of the above circumstances, in a next generation network (NGN) (a packet network architecture of ETSI TISPAN), a resource admission control subsystem (RACS) has been introduced between an application layer and a transport layer, which is responsible for a unified management of bearer network resources and providing policy-based control. What's more, the accessing and control of, for example, QoS and network address translation (NAT) of the bearer network are implemented through the RACS. The RACS architecture defined in the NGN is as shown in FIG. 1.

The RACS mainly includes a service-based policy decision function (SPDF) entity and an access-resource and admission control function (A-RACF) entity. The other parts in FIG. 1 show relations and interfaces between relevant function entities and the RACS architecture. An application function (AF) entity interacts with the SPDF entity via an interface Gq' and transfers information about session services. Specifically, the AF entity may be a proxy-call session control function (P-CSCF) entity, and an interconnect border control function (IBCF) entity. A border gateway function (BGF) entity and a resource control enforcement function (RCEF) entity are policy enforcement points of the transport layer. The SPDF entity mainly interacts with the BGF, so as to instruct the BGF to perform QoS control policy and/or NAT control.

The principle of the NAT is described as follows: the NAT replaces an unregistered address written on an Internet Protocol (IP) packet into a legal and registered IP address to solve the problem about address conflict. That is to say, an inside address is used in an internal network, and then the inside address is translated through the NAT into a legal IP address for being used over Internet. During the NAT, the address in the IP packet is replaced by a legal IP address, so as to satisfy the demand that a large number of internal hosts visit the Internet by using a few IP addresses.

However, during the implementation of the present invention, the inventors find that the prior art at least has the following defects.

In the existing networks of the operators, the NAT control and the QoS resource reservation may be realized independently or realized together. If an Authentication Authorization Request (AAR) of the AF entity merely carries media information, the SPDF entity merely performs the QoS processing; if the AAR of the AF entity merely carries NAT binding information, the SPDF entity merely performs the NAT control processing; and if the AAR of the AF entity carries both the media information and the NAT binding information, the SPDF entity performs both the QoS processing and the NAT processing. That is, in the current RACS standard, an AAR message at the interface Gq' does not carry an Attribute Value Pair (AVP) for indicating the NAT and/or QoS operation. If the operator requires performing the NAT or QoS or both of the two operations, the SPDF entity can only distinguish the two operations based on the media information or the NAT binding information, which is rather complicated and lacks flexibility.

### SUMMARY OF THE INVENTION

Accordingly, the present invention is directed to an operation indication method, an operation indication device, and an operation indication system, which are applicable to solve the problem in the prior art that an SPDF entity cannot easily and flexibly identify an NAT control operation or a QoS resource reservation operation.

The embodiments of the present invention are realized through the following technical solutions.

In an embodiment, the present invention provides an operation indication method. The operation indication method includes the following steps.

After receiving a trigger message, an AF entity determines an operation indication, in which the operation indication includes indicating a QoS resource reservation operation and/or an NAT control operation.

The AF entity sends the operation indication to an SPDF entity.

The SPDF entity receives and identifies the operation indication and performs a corresponding operation according to the operation indication.

In an embodiment, the present invention provides an AF entity, which includes an operation indication determining module and an operation indication sending module.

The operation indication determining module is adapted to determine an operation indication, in which the operation indication includes indicating a QoS resource reservation operation and/or an NAT control operation.

The operation indication sending module is adapted to send the operation indication determined by the operation indication determining module.

In an embodiment, the present invention provides an SPDF entity, which includes an operation indication identifying module and an execution module.

The operation indication identifying module is adapted to receive a message and identify an operation indication carried in the message, in which the operation indication includes indicating a QoS resource reservation operation and/or an NAT control operation.

The execution module is adapted to perform a corresponding operation according to an identification result of the operation indication identifying module.

In an embodiment, the present invention provides an operation indication system, which includes an AF entity and an SPDF entity.

The AF entity is adapted to determine and send a message carrying an operation indication after being triggered, in which the operation indication includes indicating a QoS resource reservation operation and/or an NAT control operation.

The SPDF entity is adapted to receive and identify the operation indication carried in the message sent by the AF entity, and performs a corresponding operation according to the operation indication.

As seen from the technical solutions provided by the embodiments of the present invention, in the embodiments of the present invention, a field representing an operation indication is added into a message interacted between an AF entity and an SPDF entity, so that the SPDF entity can identify quickly and easily that it is required to perform a QoS resource reservation operation, or an NAT control operation, or both of them, thereby enhancing the operation flexibility and reducing the complexity in the realization.

### BRIEF DESCRIPTION OF THE DRAWINGS

To illustrate the technical solutions according to the embodiments of the present invention or in the prior art more clearly, the accompanying drawings required for describing the embodiments or the prior art are introduced below briefly. Apparently, the accompanying drawings in the following descriptions merely show some of the embodiments of the present invention, and persons of ordinary skill in the art can obtain other drawings according to the accompanying drawings without making creative efforts.
FIG. 1 is an architectural view of a RACS defined in an NGN in the prior art;
FIG. 2 is a flow chart of a first embodiment of the present invention;
FIG. 3 is a flow chart of a second embodiment of the present invention;
FIG. 4 is a flow chart of a third embodiment of the present invention; and
FIG. 5 is a schematic structural view of a fifth embodiment of the present invention.

### DETAILED DESCRIPTION OF THE EMBODIMENTS

The technical solutions of the embodiments of the present invention are completely described below clearly with reference to the accompanying drawings. Apparently, the embodiments in the following descriptions are merely a part of the embodiments of the present invention, rather than all the embodiments of the present invention. Persons of ordinary skill in the art can derive other embodiments based on the embodiments of the present invention without making creative efforts, which all fall within the scope of the present invention.

In the embodiments of the present invention, through extending an interface between an AF entity and an SPDF entity and adding a field representing an operation indication in an interface message, the SPDF entity is enabled to identify quickly and accurately the specific operation required to be performed according to the operation indication.

The above two entities may be an AF entity and an SPDF entity.

In the following embodiment, an AF entity and an SPDF entity in the Telecommunications and Internet Converged Services and Protocols for Advanced Networking (TISPAN) system are taken as examples for illustration. Specifically, through extending an interface Gq' between the AF entity and the SPDF entity and adding an Operation-Indication AVP, the SPDF entity is enabled to distinguish that the AF entity needs to perform an NAT control operation or an QoS resource reservation operation, or both the above two operations.

After an operation indication field, Operation-Indication AVP, is added to an AAR message at the interface Gq' between the AF entity and the SPDF entity as defined by the ETSI TISPAN RTS 183 017, a format of the AAR message in an embodiment is defined as follows:

```
 <AA-Request> ::= < Diameter Header: 265, REQ, PXY >

                         < Session-Id > (Session ID)
                          {Auth-Application-Id} (Application ID)
                          {Origin-Host} (Original host)
                          {Origin-Realm} (Original realm)
                          {Destination-Realm} (Destination realm)
                      [Operation-Indication] (Operation indication of the NAT and/or the
 QoS)
                        *[Media-Component-Description](Media component
 description)
                      *[Flow-Grouping ](Flow grouping)

                         [AF-Charging-Identifier](AF charging identifier)
                         [SIP-Forking-Indication] (SIP forking indication)

                        *[Specific-Action] (Specific action)
                         [User-Name ] (User name)
                         [Binding-Information ] (Binding information)
                         [Latching-Indication ] (Latching indication)
                         [Reservation-Priority] (Reservation priority)
                         [Globally-Unique-Address] (Globally-unique address)
                         [Authorization-Lifetime ] (Authorization lifetime)
                        *[Proxy-Info ] (Proxy information)
                        *[Route-Record ] (Route record)
                        *[AVP ] Other AVPs
```

The format of the Operation-Indication AVP message may be integer 32 bits, which is defined as follows:
NAT(0): represents an NAT function indication;
QoS (1): represents a QoS function indication;
NAT(0) and QoS (1): represents performing both the NAT operation and the QoS operation.

The above description is merely one example, and different values may be set in actual operations to represent different indications.

The applications of the Operation-Indication AVP are described below in detail through different embodiments.

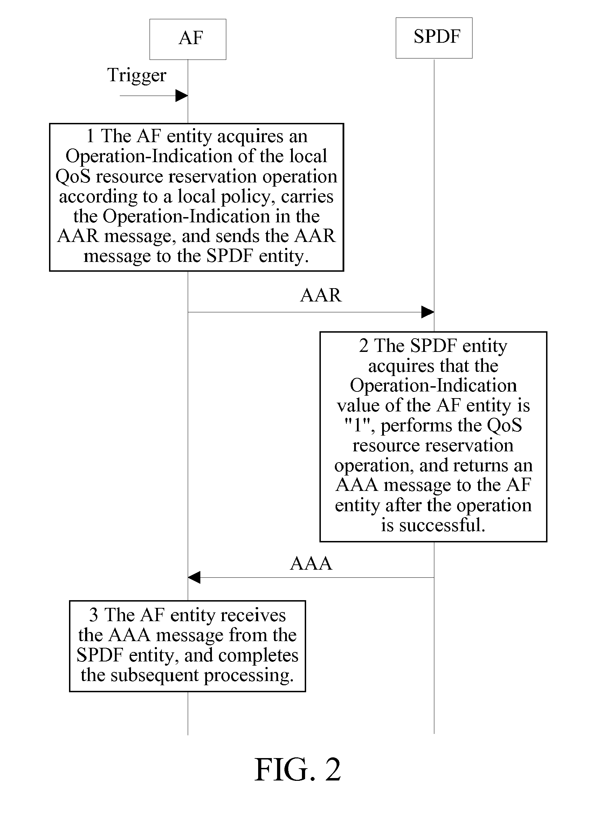

A first embodiment requires performing a QoS resource reservation operation, and when the Operation-Indication value is preset as 1, it indicates that the SPDF entity is required to perform the QoS resource reservation operation. As shown in FIG. 2, the following specific operations are included.

In Step 1, an AF entity is triggered to send an AAR message carrying an operation indication to an SPDF entity.

The AF entity may be triggered according to a received trigger message, and the trigger message may include a session signaling message or an internal operation message of the AF entity itself, and the specific triggering types may include resource requesting, resource modification, and the like.

According to specific networking, the AF entity may be a P-CSCF or an IBCF.

After being triggered, the AF entity acquires that it is required to perform the QoS resource reservation operation on a user according to a local policy, and the AF entity acquires an Operation-Indication of the local QoS resource reservation operation, carries the Operation-Indication in the AAR message, and sends the AAR message to the SPDF entity.

In Step 2, the SPDF entity acquires the AAR message from the AF entity and determines that the Operation-Indication value is "1", so as to determine that it is required to perform the QoS resource reservation operation, and returns an AA-Answer (AAA) message (a response to the AAR message) to the AF entity after the QoS resource reservation operation is successful.

According to the indication from the AF entity (P-CSCF or IBCF), the SPDF entity interacts with a core-border gateway function (C-BGF) or an interconnect-border gateway function (I-BGF) to complete the QoS resource reservation operation.

In Step 3, the AF entity receives the AAA message from the SPDF entity, and then completes the subsequent processing.

In the above embodiment, the AF entity sends the AAR message carrying the operation indication for indicating the QoS resource reservation operation, so that the SPDF entity performs a corresponding operation according to the operation indication, which increases the operation flexibility and is easily and conveniently realized.

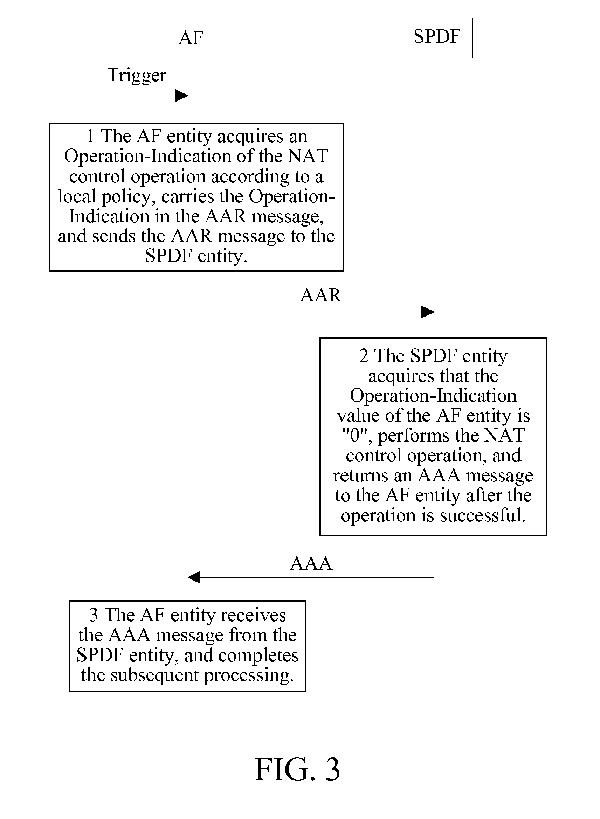

A second embodiment requires performing an NAT control operation, and when the Operation-Indication value is preset as 0, it indicates that the SPDF entity is required to perform the NAT control operation. As shown in FIG. 3, the following specific operations are included.

In Step 1, an AF entity is triggered to send an AAR message carrying an operation indication to an SPDF entity.

The AF entity may be triggered by a received session signaling message or an internal operation message of the AF entity itself, and the specific triggering types may include resource requesting, resource modification, and the like.

According to a specific networking, the AF entity may be specifically a P-CSCF or an IBCF.

After being triggered, the AF entity acquires that it is required to perform the NAT control operation on the user according to a local policy, and the AF entity acquires an Operation-Indication of the local NAT control operation, carries the Operation-Indication in the AAR message, and sends the AAR message to the SPDF entity.

In Step 2, the SPDF entity acquires the AAR message from the AF entity and determines that the Operation-Indication value is "0", so as to determine that it is required to perform the NAT control operation, and returns an AAA message to the AF entity after the NAT control operation is successful.

According to the indication from the AF entity (P-CSCF or IBCF), the SPDF entity interacts with a C-BGF or an I-BGF to complete the NAT control operation.

In Step 3, the AF entity receives the AAA message from the SPDF entity, and then completes the subsequent processing.

In the above embodiment, when the SPDF entity is required to perform the local NAT control operation, the AF entity sends the AAR message carrying an operation indication for indicating the NAT control operation to the SPDF entity, so that the SPDF entity performs a specific operation according to the operation indication, which increases an operation flexibility and is easily and conveniently realized.

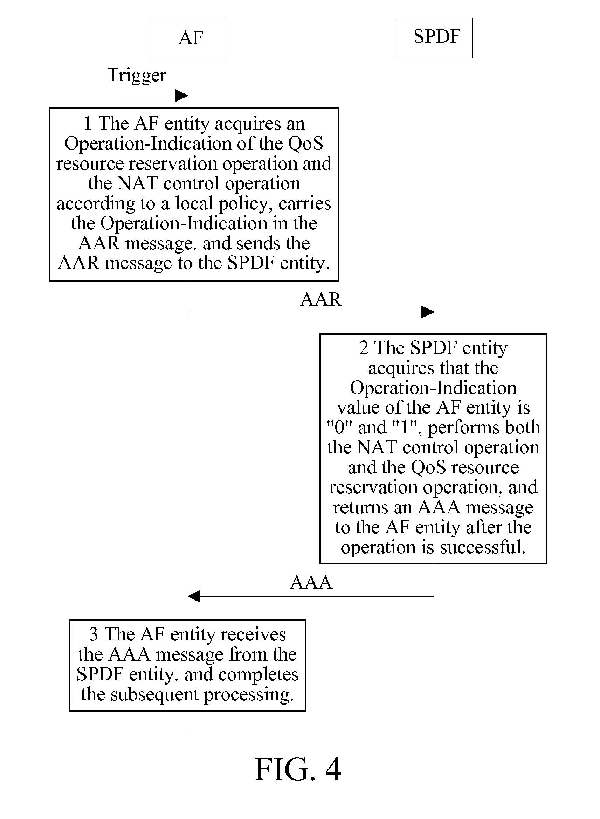

A third embodiment requires performing both a QoS resource reservation operation and an NAT control operation, and when an Operation-Indication value is preset as 0, it indicates that the SPDF entity is required to perform the NAT control operation; and when the Operation-Indication value is preset as 1, it indicates that the SPDF entity is required to perform the QoS resource reservation operation. As shown in FIG. 4, the following specific operations are included.

In Step 1, an AF entity is triggered to send an AAR message carrying an operation indication to an SPDF entity.

The AF entity may be triggered by a received session signaling message or an internal operation message of the AF entity itself, and the specific triggering types may include resource requesting, resource modification, and the like.

According to specific networking, the AF entity may be specifically a P-CSCF or an IBCF.

After being triggered, the AF entity acquires an Operation-Indication of the QoS resource reservation operation and the local NAT control operation according to a local policy, carries the Operation-Indication in the AAR message, and sends the AAR message to the SPDF entity.

In Step 2, the SPDF entity acquires the AAR message from the AF entity and determines that the Operation-Indication value is "0" and "1", so as to determines that it is required to perform both the QoS resource reservation operation and the NAT control operation, and returns an AAA message to the AF entity after the QoS resource reservation operation and the NAT control operation are both successful.

According to the indication from the AF entity (P-CSCF or IBCF), the SPDF entity interacts with a C-BGF or an I-BGF to complete the QoS resource reservation operation and the NAT control operation.

In Step 3, the AF entity receives the AAA message from the SPDF entity, and then completes the subsequent processing.

In the above embodiment, the AF entity sends the AAR message carrying a field representing an operation indication to the SPDF entity, so that the SPDF entity performs a corresponding operation according to the indication, which is easily and conveniently realized, increases the operation flexibility, and reduces the complexity in the realization.

In a fourth embodiment of the present invention, the operation indication value is a default value, and the AF entity does not send an indication value "0" or "1" to the SPDF entity. However, if an NAT binding exists, the SPDF entity is required to perform both the QoS resource reservation operation and the NAT control operation in a default state. If the NAT binding does not exist, and no operation indication is provided, the QoS resource reservation operation is performed.

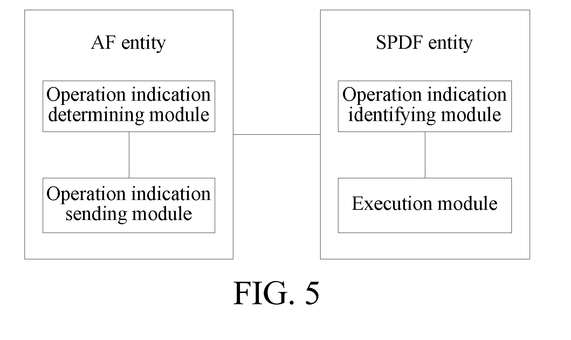

In a fifth embodiment, the present invention provides an operation indication system, and as shown in FIG. 5, the structure of the system in this embodiment includes an AF entity and an SPDF entity.

The AF entity is adapted to determine an operation indication and send an AAR message carrying the operation indication after being triggered, in which the operation indication includes indicating a QoS resource reservation operation and/or an NAT control operation. In order to achieve the above functions, the AF entity at least includes an operation indication determining module and an operation indication sending module.

The operation indication determining module is adapted to determine the operation indication, and specifically, the operation indication determining module may acquire the operation indication according to a local policy, and the operation indication may include indicating a QoS resource reservation operation and/or an NAT control operation.

The operation indication sending module is adapted to send the operation indication acquired by the operation indication determining module, and specifically, the operation indication sending module sends the operation indication by carrying the operation indication in the AAR message.

According to specific networking, the AF entity may be a P-CSCF or an IBCF.

The SPDF entity is adapted to receive and identify the operation indication carried in the message sent from the AF entity, in which the operation indication includes indicating the QoS resource reservation operation and/or NAT control operation, and the SPDF entity is further adapted to perform a corresponding operation according to the operation indication. In order to achieve the above functions, the SPDF entity at least includes an operation indication identifying module and an execution module.

The operation indication identifying module is adapted to receive the message and identify the operation indication carried in the message, in which the operation indication includes indicating a QoS resource reservation operation and/or an NAT control operation.

The execution module is adapted to perform a specific operation according to an identification result of the operation indication identifying module.

To sum up, in the embodiments of the present invention, through extending an interface between an AF entity and an SPDF entity and adding an Operation-Indication AVP representing an operation indication in an AAR message, the SPDF entity is enabled to identify quickly and easily that it is required to perform a QoS resource reservation operation or an NAT control operation, which enhances an operation flexibility and reduces complexity in the realization.

The above descriptions are merely embodiments of the present invention, but not intended to limit the present invention. Based on the embodiments of the present invention, all other embodiments obtained by persons of ordinary skill in the art through making modification, equivalent replacement, and variation without creative efforts shall fall within the scope of the present invention.

## Claims

1. An operation indication method, comprising:
determining, by an application function (AF) entity, an operation indication after receiving a trigger message, wherein the operation indication comprises indicating a quality of service (QoS) resource reservation operation and/or a network address translation (NAT) control operation;
sending, by the AF entity, the operation indication to a service-based policy decision function (SPDF) entity; and
receiving and identifying, by the SPDF entity, the operation indication, and performing a corresponding operation according to the operation indication.

2. The method according to claim 1, wherein the determining the operation indication comprises:
determining, by the AF entity, the operation indication according to a local policy.

3. The method according to claim 1, wherein the sending the operation indication comprises:
carrying the operation indication in an access authorization request (AAR) message and sending the AAR message.

4. The method according to any one of claims 1 to 3, further comprising:
predetermining a corresponding relation between the operation indication and the QoS resource reservation operation and/or the NAT control operation.

5. An application function (AF) entity, comprising:
an operation indication determining module, adapted to determine an operation indication, wherein the operation indication comprises indicating a quality of service (QoS) resource reservation operation and/or an a network address translation (NAT) control operation; and
an operation indication sending module, adapted to send the operation indication determined by the operation indication determining module.

6. A service-based policy decision function (SPDF) entity, comprising:
an operation indication identifying module, adapted to receive a message and identify an operation indication carried in the message, wherein the operation indication comprises indicating a quality of service (QoS) resource reservation operation and/or an a network address translation (NAT) control operation; and
an execution module, adapted to perform a corresponding operation according to an identification result of the operation indication identifying module.

7. An operation indication system, comprising:
an application function (AF) entity, adapted to determine and send a message carrying an operation indication after being triggered, wherein the operation indication comprises indicating a quality of service (QoS) resource reservation operation and/or an a network address translation (NAT) control operation; and
a service-based policy decision function (SPDF) entity, adapted to receive and identify the operation indication carried in the message sent by the AF entity, and performs a corresponding operation according to the operation indication.

8. The system according to claim 7, wherein the AF entity further comprises:
an operation indication determining module, adapted to determine an operation indication, wherein the operation indication comprises indicating a QoS resource reservation operation and/or an NAT control operation; and
an operation indication sending module, adapted to send the operation indication determined by the operation indication determining module.

9. The system according to claim 7 or 8, wherein the SPDF entity further comprises:
an operation indication identifying module, adapted to receive a message and identify an operation indication carried in the message, wherein the operation indication comprises indicating a QoS resource reservation operation and/or an NAT control operation; and
an execution module, adapted to perform a corresponding operation according to an identification result of the operation indication identifying module.
